# EUROPÄISCHE PATENTSCHRIFT

(11) **EP 4 026 994 B1**
(45) Veröffentlichungstag und Bekanntmachung des Hinweises auf die Patenterteilung: **29.11.2023**
(21) Anmeldenummer: 21218247.1
(22) Anmeldetag: 30.12.2021
(51) Int. Cl.: F01N 3/22, F01N 3/30, F01N 3/08, F01N 3/20

(54) **ABGASNACHBEHANDLUNGSSYSTEM SOWIE VERFAHREN ZUR ABGASNACHBEHANDLUNG EINES VERBRENNUNGSMOTORS**
WASTE GAS TREATMENT SYSTEM AND METHOD FOR TREATING THE WASTE GAS OF A COMBUSTION ENGINE
SYSTÈME DE POST-TRAITEMENT DES GAZ D'ÉCHAPPEMENT, AINSI QUE PROCÉDÉ DE POST-TRAITEMENT DES GAZ D'ÉCHAPPEMENT D'UN MOTEUR À COMBUSTION INTERNE

(30) Priorität: 06.01.2021 DE 102021100094
(43) Veröffentlichungstag der Anmeldung: 13.07.2022
(73) Patentinhaber: Volkswagen AG, 38440 Wolfsburg (DE)
(72) Erfinder: Carstensen, Asmus, 38557 Osloß (DE); Wendenburg, Stefan, 38550 Isenbüttel (DE); Brömer, Arne, 38531 Rötgesbüttel (DE)
(74) Vertreter: Gulde & Partner

(56) Entgegenhaltungen:
- DE-A1-102014 201 709
- DE-A1-102017 106 766
- DE-A1-102017 125 406
- DE-A1-102018 122 875
- DE-A1-102019 004 384

## Beschreibung

Die Erfindung betrifft ein Abgasnachbehandlungssystem für einen Verbrennungsmotor sowie ein Verfahren zur Abgasnachbehandlung eines Verbrennungsmotors mit einem solchen Abgasnachbehandlungssystem gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen StickoxidEmissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sich im Allgemeinen aus 32,5 % Harnstoff und 67,5 % Wasser zusammen.

Zudem ist bekannt, die Rohemissionen eines Verbrennungsmotors zu verringern, indem ein Teil des Abgasstroms in den Ansaugtrakt zurückgeführt und der Frischluft beigemischt wird. Dabei lässt sich bei aufgeladenen Verbrennungsmotoren zwischen einer Hochdruck-Abgasrückführung und einer Niederdruck-Abgasrückführung unterscheiden. Die Hochdruck-Abgasrückführung verbindet den Auslassbereich des Verbrennungsmotors mit dem Einlassbereich des Verbrennungsmotors. Die Niederdruck-Abgasrückführung verbindet einen Bereich in der Abgasanlage stromabwärts einer Turbine des Abgasturboladers mit einem Bereich des Ansaugtraktes stromaufwärts eines Verdichters des Abgasturboladers. Eine Freigabe der Niederdruck-Abgasrückführung kann bei aufgeladenen Diesel- und Ottomotoren erst dann erfolgen, wenn das Risiko der Kondensatbildung stromaufwärts des Verdichters des Abgasturboladers nicht mehr gegeben ist, da die Kondensattröpfchen den Verdichter beschädigen können. Üblicherweise erfolgt die Freigabe der Niederdruck-Abgasrückführung in Abhängigkeit von einer Kühlmitteltemperatur des Verbrennungsmotors, wobei ein Schwellenwert der Kühlmitteltemperatur in Abhängigkeit von der Temperatur der Ansaugluft gewählt wird und mit sinkender Ansauglufttemperatur zunimmt. Somit kann nach einem Start des Verbrennungsmotors ein Zeitraum vergehen, bevor die Niederdruck-Abgasrückführung freigegeben werden kann.

Mit der Niederdruck-Abgasrückführung kann gegenüber der Hochdruck-Abgasrückführung eine signifikante Minderung der Stickoxid-Rohemissionen erreicht werden. Darüber hinaus kann in weiten Bereichen des Motorkennfelds des Verbrennungsmotors eine höhere Abgasrückführungsrate eingestellt werden, weil für die Niederdruck-Abgasrückführung ein entsprechendes Spülgefälle zwischen dem Abgaskanal und dem Ansaugtrakt nicht erforderlich bzw. stets gegeben ist.

Die Kaltstartemissionen und der anschließende Warmlauf des Verbrennungsmotors macht einen wesentlichen Anteil der Gesamtemissionen aus. Dabei ist insbesondere die Phase vor dem Erreichen der jeweiligen Light-Off-Temperatur der Abgasnachbehandlungskomponente kritisch, da in dieser Phase die Schadstoffe im Wesentlichen unkonvertiert in die Umwelt emittiert werden. Zur Verringerung der Stickoxidemissionen sind sogenannte passive NOx-Adsorber bekannt, welche die Stickoxide schon bei vergleichsweise niedrigen Temperaturen einspeichern und bei höheren Abgastemperaturen wieder freisetzen. Passive NOx-Adsorber können jedoch durch ein unterstöchiometrisches Abgas dauerhaft geschädigt werden und ihre Wirksamkeit verlieren.

Die US 2018 / 0 283 255 A1 offenbart ein Abgasnachbehandlungssystem für einen Verbrennungsmotor mit einem passiven NOx-Adsorber sowie mit einem Sekundärluftsystem, mit welchem stromabwärts eines Auslasses des Verbrennungsmotors und stromaufwärts eines passiven NOx-Adsorbers Sekundärluft in die Abgasanlage eingeblasen werden kann, um den NOx-Adsorber vor einem unterstöchiometrischen Abgas zu schützen und somit die Dauerhaltbarkeit des passiven NOx-Adsorbers zu erhöhen.

Die US 2015 / 0 377 102 A1 offenbart einen Verbrennungsmotor mit einem Abgasnachbehandlungssystem. Das Abgasnachbehandlungssystem umfasst einen passiven NOx-Adsorber und einen Speicherkatalysator zur Zwischenspeicherung von unverbrannten Kohlenwasserstoffen während des Kaltstarts des Verbrennungsmotors sowie einen nachgeschalteten SCR-Katalysator, welcher die Stickoxide konvertiert, die aus dem passiven NOx-Adsorber freigesetzt werden.

Aus der DE 10 2017 106 766 A1 ist ein Abgasnachbehandlungssystem für einen Verbrennungsmotor bekannt, wobei das Abgasnachbehandlungssystem einen Abgaskanal umfasst, in welchem in Strömungsrichtung eines Abgasstroms des Verbrennungsmotors ein NOx-Speicherkatalysator, ein elektrisches Heizelement und ein Katalysator zur selektiven katalytischen Reduktion von Stickoxiden angeordnet sind. Dabei ist das elektrische Heizelement stromabwärts des NOx-Speicherkatalysators und stromaufwärts des Katalysators zur selektiven katalytischen Reduktion von Stickoxiden angeordnet.

Die DE 10 2019 004 384 A1 offenbart eine Vorrichtung zur Reinigung von Abgasen eines Verbrennungsmotors mit einer Abgasleitung und wenigstens einer Abgasreinigungseinrichtung in der Abgasleitung. Die Vorrichtung weist in Strömungsrichtung des Abgases vor der wenigstens einen Abgasreinigungseinrichtung eine Kühlvorrichtung für das Abgas auf.

Aus der DE 10 2014 201 709 A1 ist ein Verbrennungsmotor bekannt, bei dem eine Bypassleitung aus dem Ansaugsystem abzweigt und zwischen einem Oxidationskatalysator und einem Katalysator zur selektiven katalytischen Reduktion von Stickoxiden in ein Abgasrückführungssystem einmündet. Dabei ist eine Dosiervorrichtung zum Einbringen von flüssigem Harnstoff in die Bypassleitung als Reduktionsmittel für den Katalysator zur selektiven katalytischen Reduktion von Stickoxiden vorgesehen. Stromaufwärts der Dosiervorrichtung ist eine Pumpe vorgesehen, welche Umgebungsluft ansaugt und in die Bypassleitung fördert.

Die DE 10 2017 125 406 A1 beschreibt ein Verfahren zum Betrieb einer Abgasanlage, wobei die Abgasanlage stromabwärts eines Auslasses eines Verbrennungsmotors angeordnet ist. Die Abgasanlage weist entlang einer Strömungsrichtung eines Abgases eine erste Abgasnachbehandlungsvorrichtung, umfassend zumindest einen Partikelfilter und einen ersten Katalysator, sowie einen zweiten Katalysator auf. Durch das Verfahren wird eine Heizstrategie für den zweiten Katalysator ermittelt.

Ferner ist aus der DE 10 2018 122 875 A1 ein Abgasnachbehandlungssystem für einen Verbrennungsmotor, insbesondere für einen selbstzündenden Verbrennungsmotor nach dem Dieselprinzip, bekannt. In der Abgasanlage des Verbrennungsmotors sind in Strömungsrichtung des Abgases ein erster Katalysator, stromabwärts des ersten Katalysators eine erste Abgasnachbehandlungskomponente zur selektiven katalytischen Reduktion von Stickoxiden und weiter stromabwärts eine zweite Abgasnachbehandlungskomponente zur selektiven katalytischen Reduktion von Stickoxiden angeordnet. Dabei ist stromabwärts der ersten Abgasnachbehandlungskomponente und stromaufwärts der zweiten Abgasnachbehandlungskomponente ein Niedertemperatur-NOx-Speicherkatalysator angeordnet.

Der Erfindung liegt nun die Aufgabe zugrunde, das Einspeicherverhalten sowie die Freisetzung von Stickoxiden durch den passiven NOx-Adsorber in der Kaltstartphase des Verbrennungsmotors zu optimieren und somit die Gesamtemissionen des Verbrennungsmotors zu verringern.

Diese Aufgabe wird durch ein Abgasnachbehandlungssystem für einen Verbrennungsmotor, umfassend eine Abgasanlage, in welcher in Strömungsrichtung eines Abgasstroms des Verbrennungsmotors stromabwärts einer Turbine eines Abgasturboladers ein passiver NOx-Adsorber und stromabwärts des passiven NOx-Adsorbers mindestens eine Abgasnachbehandlungskomponente zur selektiven katalytischen Reduktion von Stickoxiden angeordnet ist. Erfindungsgemäß ist vorgesehen, dass das Abgasnachbehandlungssystem einen Verdichter sowie eine Heizvorrichtung umfasst, wobei der Verdichter über eine Sekundärluftleitung mit einer Einleitstelle zur Einleitung von Sekundärluft in die Abgasanlage verbunden ist, welche stromabwärts der Turbine des Abgasturboladers und stromaufwärts des passiven NOx-Adsorbers angeordnet ist. Die Heizvorrichtung ist in der Abgasanlage stromabwärts des passiven NOx-Adsorbers und stromaufwärts mindestens einer Abgasnachbehandlungskomponente zur selektiven katalytischen Reduktion von Stickoxiden angeordnet.

Ein erfindungsgemäßes Abgasnachbehandlungssystem ermöglicht es, nach einem Kaltstart des Verbrennungsmotors die Stickoxide so lange in dem passiven NOx-Adsorber einzuspeichern, bis die stromabwärts des passiven NOx-Adsorbers angeordnete Abgasnachbehandlungskomponente zur selektiven katalytischen Reduktion von Stickoxiden ihre Light-Off-Temperatur erreicht hat. Somit können bei einer zeitlich nachfolgenden thermischen Desorption der Stickoxide aus dem passiven NOx-Adsorber die freigesetzten Stickoxide durch die stromabwärts des passiven NOx-Adsorbers angeordnete Abgasnachbehandlungskomponente zur selektiven katalytischen Reduktion von Stickoxiden konvertiert werden. Durch die Einblasung von Sekundärluft wird der passive NOx-Adsorber dabei in einem Temperaturbereich gehalten, welcher eine thermische Desorption der Stickoxide vermeidet. Gleichzeitig wird die Abgasnachbehandlungskomponente zur selektiven katalytischen Reduktion von Stickoxiden durch die Heizvorrichtung unabhängig vom Betriebspunkt des Verbrennungsmotors erwärmt. Dabei kann die Heizvorrichtung die Abgasnachbehandlungskomponente zur selektiven katalytischen Reduktion von Stickoxiden sowohl unmittelbar als auch mittelbar, durch ein Aufheizen des Abgasstroms stromaufwärts dieser Abgasnachbehandlungskomponente, erwärmen. Somit können die Stickoxidemissionen in der Kaltstartphase eines Verbrennungsmotors signifikant verringert werden, da sie solange in dem passiven NOx-Adsorber eingespeichert werden, bis eine Konvertierung durch die Abgasnachbehandlungskomponente zur selektiven katalytischen Reduktion von Stickoxiden möglich ist.

Durch die in den abhängigen Ansprüchen genannten Merkmale sind vorteilhafte Weiterentwicklungen und nicht triviale Verbesserungen des im unabhängigen Anspruch angegebenen Abgasnachbehandlungssystems möglich.

In einer bevorzugten Ausgestaltung des Abgasnachbehandlungssystems ist vorgesehen, dass der Verbrennungsmotor mit einem Luftversorgungssystem verbunden ist, wobei der Verdichter in dem Luftversorgungssystem des Verbrennungsmotors angeordnet und als elektrisch angetriebener Verdichter ausgebildet ist, welcher über einen Ansaugkanal mit einem Einlass des Verbrennungsmotors sowie über die Sekundärluftleitung mit der Einleitstelle verbunden ist. Weist der Verbrennungsmotor bereits einen elektrisch angetriebenen Verdichter im Luftversorgungssystem auf, so kann dieser Verdichter dazu genutzt werden, die Sekundärluft bereitzustellen.

Bevorzugt ist dabei, wenn der elektrisch angetriebene Verdichter in einem Bypass zu einem Hauptkanal eines Ansaugkanals des Luftversorgungssystems angeordnet ist, wobei in dem Hauptkanal ein Rückschlagventil angeordnet ist. Durch eine Anordnung des elektrisch angetriebenen Verdichters in einem Bypass können die Strömungsverluste minimiert werden, wenn der elektrisch angetriebene Verdichter nicht in Betrieb ist. Durch das Rückschlagventil wird betriebssicher verhindert, dass die vom elektrisch angetriebenen Verdichter verdichtete Frischluft wieder in Richtung des Verdichters des Abgasturboladers zurückströmt.

Bevorzugt ist ferner, wenn in der Sekundärluftleitung ein steuerbares Ventil zur Sperrung oder Freigabe der Sekundärluftleitung, insbesondere ein elektrisch betätigbares Rückschlagventil, angeordnet ist. Um einen dauerhaften Eintrag von Sekundärluft in die Abgasanlage zu vermeiden und/oder ein Rückströmen von Abgas in den Ansaugkanal zu verhindern, ist in der Sekundärluftleitung ein steuerbares Ventil angeordnet, welches die Sekundärluftleitung wahlweise sperren oder freigeben kann. In einer besonders einfachen und kostengünstigen Ausführungsform ist das steuerbare Ventil als elektrisch betätigbares Rückschlagventil mit einer Sperroption ausgeführt.

In einer vorteilhaften Ausgestaltung des Abgasnachbehandlungssystems ist vorgesehen, dass die Heizvorrichtung als elektrisches Heizelement ausgebildet ist oder ein elektrisches Heizelement umfasst. Durch ein elektrisches Heizelement ist ein sehr exakt regelbarer Wärmeeintrag in die Abgasanlage stromabwärts des passiven NOx-Adsorbers möglich. Dabei kann das elektrische Heizelement die Abgasnachbehandlungskomponente zur selektiven katalytischen Reduktion von Stickoxiden entweder direkt oder mittelbar, durch ein Aufheizen des Abgasstroms stromaufwärts dieser Abgasnachbehandlungskomponente erwärmen. Ein elektrisches Heizelement lässt sich kompakt und platzsparend ausführen und kann somit einfach in die Abgasanlage integriert werden.

In einer bevorzugten Ausgestaltung des Abgasnachbehandlungssystems ist vorgesehen, dass das elektrische Heizelement unmittelbar stromabwärts des passiven NOx-Adsorbers und stromaufwärts eines Oxidationskatalysators angeordnet ist. Durch eine Anordnung des elektrischen Heizelements unmittelbar stromabwärts des passiven NOx-Adsorbers können sämtliche nachfolgenden Abgasnachbehandlungskomponenten nach dem Kaltstart auf ihre jeweilige Light-Off-Temperatur aufgeheizt werden. Somit wird nicht nur die Abgasnachbehandlungskomponente zur selektiven katalytischen Reduktion von Stickoxiden, sondern auch Abgasnachbehandlungskomponenten zur Konvertierung weiterer Schadstoffe, insbesondere ein Oxidationskatalysator zur Konvertierung von unverbrannten Kohlenwasserstoffen (HC) und Kohlenstoffmonoxid (CO) nach dem Kaltstart zeitnah auf seine Betriebstemperatur aufgeheizt. Hat der Oxidationskatalysator seine Betriebstemperatur erreicht, so kann durch die exotherme Umsetzung von unverbrannten Abgaskomponenten die Abgastemperatur weiter erhöht werden, sodass der Oxidationskatalysator das Aufheizen der Abgasnachbehandlungskomponente zur selektiven katalytischen Reduktion von Stickoxiden unterstützt.

In einer vorteilhaften Ausgestaltung des Abgasnachbehandlungssystems ist vorgesehen, dass das elektrische Heizelement eine Heizleistung von 1 KW bis 8 KW, vorzugsweise von 2 KW bis 6 KW, besonders bevorzugt zwischen 3 KW und 5 KW aufweist. Durch eine entsprechend hohe Heizleistung kann das Zeitintervall vom Kaltstart des Verbrennungsmotors bis zum Erreichen der Light-Off-Temperatur der Abgasnachbehandlungskomponente zur selektiven katalytischen Reduktion von Stickoxiden verkürzt werden. Da der passive NOx-Adsorber nur eine begrenzte Speicherkapazität hat, ist es notwendig, dass die Abgasnachbehandlungskomponente zur slektiven katalytischen Reduktion ihre Light-Off-Temperatur erreicht, bevor der passive NOx-Adsorber vollständig beladen ist und keine weiteren Stickoxide mehr einspeichern kann.

Besonders bevorzugt ist dabei, wenn das elektrische Heizelement aus einem Bordnetz eines Kraftfahrzeuges mit einer Spannung von 32 Volt bis 52 Volt, insbesondere aus einem 48-Volt-Bordnetz, versorgbar ist. Durch ein 48-Volt-Bordnetz lässt sich gegenüber einem 12-Volt-Bordnetz eine höhere Heizleistung für das elektrische Heizelement darstellen. Durch eine Heizleistung von mindestens 3 KW kann eine derart starke Aufheizung des Abgasstroms des Verbrennungsmotors oder der Abgasnachbehandlungskomponente erreicht werden, dass die Abgasnachbehandlungskomponente zur selektiven katalytischen Reduktion von Stickoxiden in weniger als 30 Sekunden, vorzugsweise in weniger als 15 Sekunden, besonders in weniger als 10 Sekunden ab dem Motorstart des Verbrennungsmotors ihre Light-Off-Temperatur erreicht.

Alternativ oder zusätzlich ist mit Vorteil vorgesehen, dass die Heizvorrichtung als Abgasbrenner ausgebildet ist oder einen Abgasbrenner umfasst. Durch einen Abgasbrenner kann im Vergleich zu einem elektrischen Heizelement eine nochmals höhere Heizleistung realisiert werden, wodurch das Aufheizen der Abgasnachbehandlungskomponente zur selektiven katalytischen Reduktion nochmals beschleunigt werden kann. Ferner können durch den Abgasbrenner eine oder mehrere Abgasnachbehandlungskomponenten in Unterbodenlage eines Kraftfahrzeuges auf ihre Light-Off-Temperatur aufgeheizt und/oder oberhalb dieser Light-Off-Temperatur gehalten werden.

Bevorzugt ist dabei, wenn der Verdichter über die Sekundärluftleitung mit der Einleitstelle und über eine Versorgungsleitung mit dem Abgasbrenner verbunden ist. Da zur Luftversorgung des Abgasbrenners ohnehin ein Verdichter notwendig ist, kann dieser Verdichter genutzt werden, die zur Kühlung des passiven NOx-Adsorbers notwendige Sekundärluft bereitzustellen.

Besonders bevorzugt ist dabei, wenn stromabwärts des Verdichters mindestens ein Steuerelement angeordnet ist, mit welchem der vom Verdichter bereitgestellte Frischluftstrom wahlweise der Sekundärluftleitung, der Versorgungsleitung oder anteilig beiden Leitungen zugeführt werden kann. Das Steuerelement kann insbesondere als ein Schaltventil ausgeführt sein, welches in einer ersten Schaltstellung den Verdichter mit der Sekundärluftleitung und in einer zweiten Schaltstellung den Verdichter mit der Versorgungsleitung verbindet. Zusätzlich kann das Schaltventil eine dritte Schaltstellung aufweisen, in welcher der Verdichter von beiden Leitungen getrennt ist und/oder eine vierte Schaltstellung, in welcher der Verdichter sowohl mit der Sekundärluftleitung als auch mit der Versorgungsleitung verbunden ist.

In einer bevorzugten Ausgestaltung des Abgasnachbehandlungssystems ist vorgesehen, dass stromabwärts des passiven NOx-Adsorbers als erste Abgasnachbehandlungskomponente zur selektiven katalytischen Reduktion von Stickoxiden ein Partikelfilter mit einer Beschichtung zur selektiven katalytischen Reduktion von Stickoxiden und stromabwärts des Partikelfilters eine weitere Abgasnachbehandlungskomponente zur selektiven katalytischen Reduktion von Stickoxiden, insbesondere ein SCR-Katalysator, angeordnet ist, wobei stromabwärts des Partikelfilters und stromaufwärts der weiteren Abgasnachbehandlungskomponente an der Abgasanlage eine zweite Einleitstelle für den Abgasbrenner ausgebildet ist, an welcher ein Abgasstrom des Abgasbrenners in den Abgaskanal der Abgasanlage eingeleitet werden kann. Insbesondere sind dabei ein motornaher Partikelfilter mit einer SCR-Beschichtung und ein SCR-Katalysator in Unterbodenlage eines Kraftfahrzeugs vorgesehen. Dadurch kann der Temperaturbereich erweitert werden, in welchem mindestens eine Abgasnachbehandlungskomponenten zur selektiven katalytischen Reduktion von Stickoxiden in einem zur Reduktion der Stickoxidemissionen idealen Temperaturbereich betrieben wird.

In einer weiteren Verbesserung der Erfindung ist dabei vorgesehen, dass stromabwärts des passiven NOx-Adsorbers und stromaufwärts des Partikelfilters mit SCR-Beschichtung ein elektrisches Heizelement und stromabwärts des Partikelfilters und stromaufwärts des SCR-Katalysators in Unterbodenlage die zweite Einleitstelle für den Abgasbrenner angeordnet ist. Alternativ oder zusätzlich zu einem SCR-Katalysator in Unterbodenlage kann auch ein weiterer Partikelfilter mit einer SCR-Beschichtung als weitere Abgasnachbehandlungskomponente zur selektiven katalytischen Reduktion von Stickoxiden vorgesehen werden.

Besonders bevorzugt ist dabei, wenn stromabwärts des Partikelfilters und stromaufwärts der weiteren Abgasnachbehandlungskomponente zur selektiven katalytischen Reduktion von Stickoxiden eine Abgasrückführungsleitung einer Niederdruckabgasrückführung aus einem Abgaskanal der Abgasanlage abzweigt. Dazu ist stromabwärts der Verzweigung von Abgaskanal und Abgasrückführungsleitung in dem Abgaskanal eine Abgasstauklappe angeordnet, mit welcher der Abgaskanal zumindest anteilig versperrt werden kann, um den über die Niederdruck-Abgasrückführung zurückgeführten Abgasstrom zu steuern. Durch die Niederdruckabgasrückführung können die Rohemissionen des Verbrennungsmotors verringert werden. Durch eine Heizvorrichtung, welche stromabwärts des passiven NOx-Adsorbers und stromaufwärts der Verzweigung für die Niederdruckabgasrückführung angeordnet ist, kann die Heizvorrichtung auch dazu genutzt werden, die Niederdruckabgasrückführung gegenüber einem unbeheizten Abgasnachbehandlungssystem zeitlich früher nach einem Kaltstart des Verbrennungsmotors zu aktivieren und somit die Rohemissionen des Verbrennungsmotors zu senken.

In einer vorteilhaften Ausgestaltung des Abgasnachbehandlungssystems ist vorgesehen, dass in der Sekundärluftleitung ein steuerbares Ventil zur Sperrung oder Freigabe der Sekundärluftleitung und in der Versorgungsleitung eine verstellbare Drossel angeordnet sind. Durch eine verstellbare Drossel kann auf einfache und kostengünstige Art und Weise die Luftzufuhr zu dem Abgasbrenner und der ersten Einleitstelle stromabwärts der Turbine des Abgasturboladers und stromaufwärts des passiven NOx-Adsorbers gesteuert werden.

In einer weiteren Verbesserung des Abgasnachbehandlungssystems ist vorgesehen, dass in der Abgasrückführungsleitung ein Abgasrückführungskühler angeordnet ist, wobei die Abgasrückführungsleitung der Niederdruckabgasrückführung stromabwärts des Abgasrückführungskühlers eine weitere Verzweigung aufweist, an der eine Bypassleitung abzweigt, welche die Abgasrückführungsleitung mit dem Abgaskanal stromabwärts der Abgasstauklappe verbindet. Dadurch kann der Abgasrückführungskühler in einer Kaltstartphase des Verbrennungsmotors als Abgaswärmerückgewinnungskomponente genutzt werden, wobei der zurückgeführte Abgasstrom das zu diesem Zeitpunkt noch kalte Kühlmittel des Verbrennungsmotors erwärmt. Dadurch können die innere Reibung im Verbrennungsmotor verringert und der Wirkungsgrad erhöht werden.

Ein weiterer Teilaspekt der Erfindung betrifft ein Verfahren zur Abgasnachbehandlung eines Verbrennungsmotors mit einem solchen Abgasnachbehandlungssystem, welches folgende Schritte umfasst:
- Starten des Verbrennungsmotors, wobei ein Abgasstrom des Verbrennungsmotors ab dem Start des Verbrennungsmotors durch die Abgasanlage geleitet wird,
- Vergleichen einer Temperatur des passiven NOx-Adsorbers mit einer ersten Schwel lentem peratur,
- Einblasen von Sekundärluft in die Abgasanlage stromabwärts des passiven NOx-Adsorbers, um den passiven NOx-Adsorber zu kühlen, wenn die Temperatur des passiven NOx-Adsorbers die erste Schwellentemperatur überschreitet,
- Erwärmen des Abgasstroms des Verbrennungsmotors oder zumindest einer Abgasnachbehandlungskomponente zur selektiven katalytischen Reduktion von Stickoxiden durch die Heizvorrichtung, um zumindest eine Abgasnachbehandlungskomponente zur selektiven katalytischen Reduktion von Stickoxiden auf ihre Light-Off-Temperatur aufzuheizen, bevor die Temperatur des passiven NOx-Adsorbers eine zweite Schwellentemperatur überschreitet.

Durch ein solches Verfahren können die Kaltstartemissionen des Verbrennungsmotors verringert und strengere Abgasgesetzgebungen erfüllt werden. Dabei wird der passive NOx-Adsorber nach Erreichen der ersten Schwellentemperatur durch das Einblasen der Sekundärluft gekühlt, sodass die Temperatur des passiven NOx-Adsorbers nicht die zweite Schwellentemperatur übersteigt, ab welcher die im passiven NOx-Adsorber eingespeicherten Stickoxide desorbieren, bevor die stromabwärts des passiven NOx-Adsorbers angeordnete Abgasnachbehandlungskomponente zur selektiven katalytischen Reduktion von Stickoxiden durch die Heizvorrichtung auf ihre Light-Off-Temperatur aufgeheizt wurde und bei einer nachfolgenden weiteren Erwärmung des passiven NOx-Adsorbers die durch Desportion freigesetzten Stickoxide mittels selektiver, katalytischer Reduktion konvertieren kann. Somit ist ab dem Erreichen der Einspeichertemperatur des passiven NOx-Adsorbers sichergestellt, dass die Stickoxide entweder eingespeichert oder konvertiert werden und nicht unkonvertiert in die Umwelt emittiert werden. Somit können die Kaltstartemissionen, insbesondere die Stickoxidemissionen, signifikant verringert werden.

In einer vorteilhaften Ausgestaltung des Verfahrens ist vorgesehen, dass über das Heizelement und das zurückgeführte Abgas die Ansaugluft des Verbrennungsmotors erwärmt wird, um die Rohemissionen des Verbrennungsmotors abzusenken. Infolge der dann möglichen Erwärmung der Ladeluft durch wärmeres, zurückgeführtes Abgas kann eine hinsichtlich der Emissionen an Kohlenstoffmonoxid (CO), unverbrannten Kohlenwasserstoffen (HC) und Partikeln schadstoffärmere Verbrennung im Schwachlastbetrieb des Verbrennungsmotors erreicht werden. Ferner kann durch das Aufheizen der Ansaugluft die Abgastemperatur gesteigert werden, sodass die Abgasnachbehandlungskomponenten schneller ihre jeweilige Light-Off-Temperatur erreichen. Optional kann die Kühlmitteldurchströmung des Ladeluftkühlers gedrosselt oder verhindert werden oder ein Bypass für den Ladeluftkühler vorgesehen werden, um die Temperatur der Ansaugluft im Schwachlastbetrieb zu erhöhen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erstes bevorzugtes Ausführungsbeispiel eines Verbrennungsmotors mit einem erfindungsgemäßen Abgasnachbehandlungssystem;
- Figur 2: ein zweites bevorzugtes Ausführungsbeispiel eines Verbrennungsmotors mit einem erfindungsgemäßen Abgasnachbehandlungssystem mit einem elektrisch antreibbaren Zusatzverdichter im Luftversorgungssystem;
- Figur 3: ein drittes bevorzugtes Ausführungsbeispiel eines Verbrennungsmotors mit einem erfindungsgemäßen Abgasnachbehandlungssystem mit einem Abgasbrenner zur Beheizung einer Abgasnachbehandlungskomponente in einer Unterbodenposition eines Kraftfahrzeuges;
- Figur 4: ein weiteres bevorzugtes Ausführungsbeispiel eines Verbrennungsmotors mit einem erfindungsgemäßen Abgasnachbehandlungssystems; und
- Figur 5: ein Diagramm, welches den zeitlichen Verlauf der Temperaturen des Abgasstroms des Verbrennungsmotors und des passiven NOx-Adsorbers bei einem erfindungsgemäßen Verfahren zur Abgasnachbehandlung eines Verbrennungsmotors darstellt.

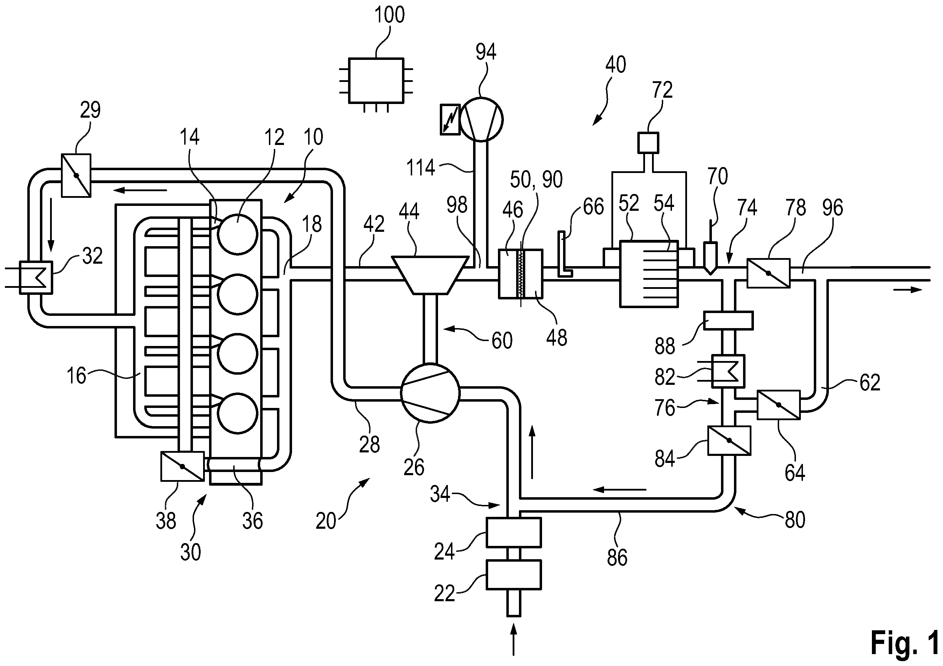

Figur 1 zeigt die schematische Darstellung eines Verbrennungsmotors 10. Der Verbrennungsmotor 10 ist als direkteinspritzender Dieselmotor ausgeführt. Der Verbrennungsmotor 10 weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Verbrennungsmotor 10 ist mit seinem Einlass 16 mit einem Luftversorgungssystem 20 und mit seinem Auslass 18 mit einer Abgasanlage 40 verbunden. Der Verbrennungsmotor 10 umfasst ferner eine Hochdruck-Abgasrückführung 30 mit einer Abgasrückführungsleitung 36 und einem Hochdruck-Abgasrückführungsventil 38, über welches ein Abgas des Verbrennungsmotors 10 von dem Auslass 18 zum Einlass 16 zurückgeführt werden kann. An den Brennräumen 12 sind Einlassventile und Auslassventile angeordnet, mit welchen eine fluidische Verbindung vom Luftversorgungssystem 20 zu den Brennräumen 12 oder von den Brennräumen 12 zur Abgasanlage 40 geöffnet oder verschlossen werden kann.

Das Luftversorgungssystem 20 umfasst einen Ansaugkanal 28, in welchem in Strömungsrichtung von Frischluft durch den Ansaugkanal 28 ein Luftfilter 22, stromabwärts des Luftfilters 22 ein Luftmassenmesser 24, insbesondere ein Heißfilmluftmassenmesser, stromabwärts des Luftmassenmessers 24 ein Verdichter 26 eines Abgasturboladers 60, stromabwärts des Verdichters 26 ein Ladeluftkühler 32 angeordnet sind. Stromabwärts des Verdichters 26 und stromaufwärts des Einlasses 16 ist eine Drosselklappe 29 angeordnet, mit welcher die Luftversorgung für die Brennräume 12 des Verbrennungsmotors 10 gesteuert werden kann. Der Luftmassenmesser 24 kann auch in einem Filtergehäuse des Luftfilters 22 angeordnet sein, sodass der Luftfilter 22 und der Luftmassenmesser 24 eine Baugruppe ausbilden. Stromabwärts des Luftfilters 22 und stromaufwärts des Verdichters 26 ist eine Einmündung 34 vorgesehen, an welcher eine Abgasrückführungsleitung 86 einer Niederdruck-Abgasrückführung 80 in den Ansaugkanal 28 mündet.

Die Abgasanlage 40 umfasst einen Abgaskanal 42, in welchem in Strömungsrichtung eines Abgases des Verbrennungsmotors 10 durch den Abgaskanal 42 eine Turbine 44 des Abgasturboladers 60 angeordnet ist, welche den Verdichter 26 im Luftversorgungssystem 20 über eine Welle antreibt. Der Abgasturbolader 60 ist vorzugsweise als Abgasturbolader 60 mit variabler Turbinengeometrie ausgeführt. Dazu sind einem Turbinenrad der Turbine 44 verstellbare Leitschaufeln vorgeschaltet, über welche die Anströmung des Abgases auf die Schaufeln der Turbine 44 variiert werden kann. Stromabwärts der Turbine 44 sind mehrere Abgasnachbehandlungskomponenten 46, 48, 52, 54, 56, 58 vorgesehen. Dabei ist unmittelbar stromabwärts der Turbine 44 als erste Komponente der Abgasnachbehandlung ein passiver NOx-Adsorber 46 vorgesehen, welchem ein Oxidationskatalysator 48 nachgeschaltet ist. Stromabwärts des passiven NOx-Adsorbers 46 und stromaufwärts des Oxidationskatalysators 48 ist eine Heizvorrichtung 50 in Form eines elektrischen Heizelements 90 angeordnet. Das elektrische Heizelement 50 weist vorzugsweise eine Heizleistung von 1 KW bis 8 KW, bevorzugt von 2 KW bis 6KW, besonders bevorzugt von 3 KW bis 5 KW auf. Vorzugsweise wird das elektrische Heizelement 90 aus einem Bordnetz mit einer Spannung von 32V - 52V, besonders bevorzugt aus einem 48V-Bordnetz eines Kraftfahrzeuges mit elektrischem Strom versorgt.

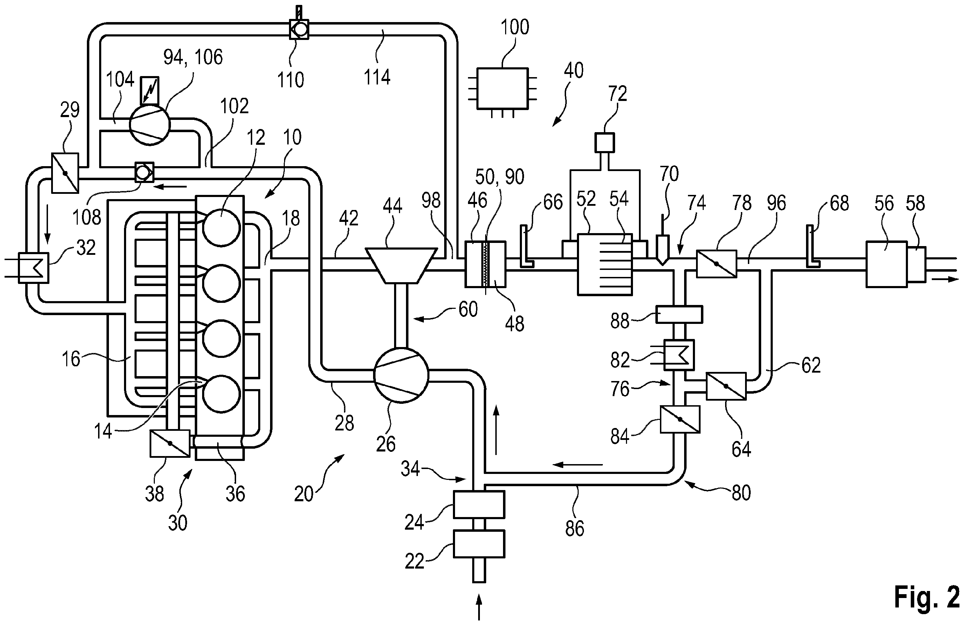

Stromabwärts des Oxidationskatalysators 48 ist eine Abgasnachbehandlungskomponente 52, 54, 56 zur selektiven katalytischen Reduktion von Stickoxiden, insbesondere ein Partikelfilter 52 mit einer Beschichtung 54 zur selektiven katalytischen Reduktion von Stickoxiden. Stromabwärts des Partikelfilters 52 kann, wie in Figur 2 dargestellt, ein weiterer SCR-Katalysator 56 angeordnet, welchem ein Ammoniak-Sperrkatalysator 58 nachgeschaltet sein kann. Stromabwärts des Partikelfilters 52 ist in dem Abgaskanal 42 eine Abgasstauklappe 78 vorgesehen, mit welcher der Querschnitt eines Hauptkanals 96 des Abgaskanals 42 zumindest teilweise versperrt werden kann, um den Abgasgegendruck im Abgaskanal 42 zu erhöhen. Stromabwärts des Partikelfilters 52 und stromaufwärts der Abgasstauklappe 78 ist am Abgaskanal 42 eine erste Verzweigung 74 vorgesehen, an welcher eine Abgasrückführungsleitung 86 einer Niederdruck-Abgasrückführung 80 aus dem Abgaskanal 42 abzweigt. Stromabwärts der Turbine 44 des Abgasturboladers und stromaufwärts des passiven NOx-Adsorbers 46 ist an der Abgasanlage 40 eine Einleitstelle 98 ausgebildet, an welcher Sekundärluft in den Abgaskanal 42 der Abgasanlage 40 eingeblasen werden kann. Dazu ist ein Verdichter 94, vorzugsweise ein elektrisch angetriebener Verdichter, über eine Sekundärluftleitung 114 mit der Einleitstelle 98 verbunden.

Die Niederdruck-Abgasrückführung 80 umfasst neben der Abgasrückführungsleitung 86 einen Niederdruck-Abgasrückführungskühler 82 und ein Abgasrückführungsventil 84, über welches die Abgasrückführung durch die Abgasrückführungsleitung 86 steuerbar ist. Ferner ist in der Niederdruck-Abgasrückführung 80 stromabwärts der ersten Verzweigung 74 und stromaufwärts des Abgasrückführungskühlers 82 ein Filter 88 angeordnet.

Optional ist stromabwärts des Abgasrückführungskühlers 82 an der Abgasrückführungsleitung 86 eine weitere Verzweigung 76 ausgebildet, an welcher eine Bypassleitung 62 aus der Abgasrückführungsleitung 86 abzweigt, welche den Abgasrückführungskanal 86 mit dem Hauptkanal 96 der Abgasanlage 40 stromabwärts der Abgasstauklappe 78 und stromaufwärts des SCR-Katalysators 56 verbindet. In der Bypassleitung 62 ist ein Steuerelement 64, insbesondere eine Regelungsklappe, angeordnet, mit welcher die Bypassleitung 62 geöffnet und verschlossen werden kann. Der Abgasrückführungskühler 82 kann insbesondere in einer Kaltstartphase des Verbrennungsmotors 10 dazu genutzt werden, einen Teil der Abwärme des Abgases auf das Kühlmittel des Verbrennungsmotors 10 zu übertragen und somit diese Abwärme zumindest teilweise zurückzugewinnen.

In dem Abgaskanal 42 können ein oder mehrere Temperatursensor(en) 70 vorgesehen sein, mit welchem eine Abgastemperatur in der Abgasanlage 40 überwacht werden kann, um eine effektive und effiziente Abgasnachbehandlung des Abgases des Verbrennungsmotors 10 zu ermöglichen. Ferner können Differenzdrucksensoren 72 vorgesehen sein, um eine Druckdifferenz über den Partikelfilter 52 zu bestimmen. Auf diese Weise kann der Beladungszustand des Partikelfilters 52 ermittelt und bei Überschreiten eines definierten Beladungsniveaus eine Regeneration des Partikelfilters 52 eingeleitet werden. Ferner ist am Abgaskanal 42 mindestens ein Dosierelement 66, 68 vorgesehen, um ein Reduktionsmittel, insbesondere wässrige Harnstofflösung, stromaufwärts des SCR-Katalysators 56 und/oder stromaufwärts des Partikelfilters 52 in den Abgaskanal 42 zu dosieren. Vorzugsweise sind zwei Dosierelemente 66, 68 vorgesehen, wobei das erste Dosierelement 66 stromabwärts des ersten Katalysators 46 und stromaufwärts des Partikelfilters 52 und das zweite Dosierelement 68 stromabwärts der Abgasstauklappe 78 und stromaufwärts des SCR-Katalysators 56 angeordnet ist. Jedem Dosierelement 66, 68 kann ein Abgasmischer nachgeschaltet sein, um eine verbesserte Durchmischung des Abgasstroms mit dem Reduktionsmittel zu erzielen.

Der Verbrennungsmotor 10 ist mit einem Motorsteuergerät 100 verbunden, welches über nicht dargestellte Signalleitungen mit den Druck- und Temperatursensoren 70, 72 sowie mit den Kraftstoffinjektoren 14 des Verbrennungsmotors 10 und den Steuereinrichtungen 24, 38, 64, 66, 68, 78, 84 des Luftversorgungssystems 20 sowie der Abgasanlage 40 verbunden ist. Ferner ist das Motorsteuergerät 100 mit dem Verdichter 94, 106 verbunden, um den durch den Verdichter 94, 106 erzeugten Luftstrom zu steuern.

In Figur 2 ist ein zweites Ausführungsbeispiel eines Verbrennungsmotors 10 mit einem erfindungsgemäßen Abgasnachbehandlungssystem dargestellt. Bei im Wesentlichen gleichem Aufbau wie zu Figur 1 ausgeführt, weist der Ansaugkanal 28 in diesem Ausführungsbeispiel eine Verzweigung 102 auf, an welcher ein Bypass 104 aus einem Hauptkanal 122 des Luftversorgungssystems abzweigt und an einer Einmündung 124 wieder in den Hauptkanal 122 einmündet. In dem Bypass ist ein elektrisch angetriebener Zusatzverdichter 106, welcher auch als elektrisch angetriebener Booster bezeichnet wird, angeordnet, mit welchem die Ansaugluft des Verbrennungsmotors 10 zusätzlich zum Verdichter 26 des Abgasturboladers 60 verdichtet werden kann. In dem Hauptkanal 122 ist ein Rückschlagventil 108 angeordnet, um ein Zurückströmen des durch den elektrisch angetriebenen Zusatzverdichters verdichteten Luftstroms zu verhindern.

Der elektrisch angetriebene Verdichter dient insbesondere dazu, das Ansprechverhalten des Verbrennungsmotors 10 bei einer Beschleunigung aus niedrigen Drehzahlen zu verbessern und/oder um kurzfristig die Maximalleistung des Verbrennungsmotors 10 zu steigern. Der elektrisch angetriebene Zusatzverdichter 106 ist über den Ansaugkanal 28 mit dem Einlass 16 des Verbrennungsmotors 10 verbunden. Der elektrische Zusatzverdichter ist über die Sekundärluftleitung 114 mit der Einleitstelle 98 stromabwärts der Turbine 44 des Abgasturboladers 60 und stromaufwärts des passiven NOx-Adsorbers 46 verbunden. In der Sekundärluftleitung 114 ist ein steuerbares Ventil 110 zur Sperrung oder Freigabe der Sekundärluftleitung, insbesondere ein elektrisch betätigbares Rückschlagventil, angeordnet.

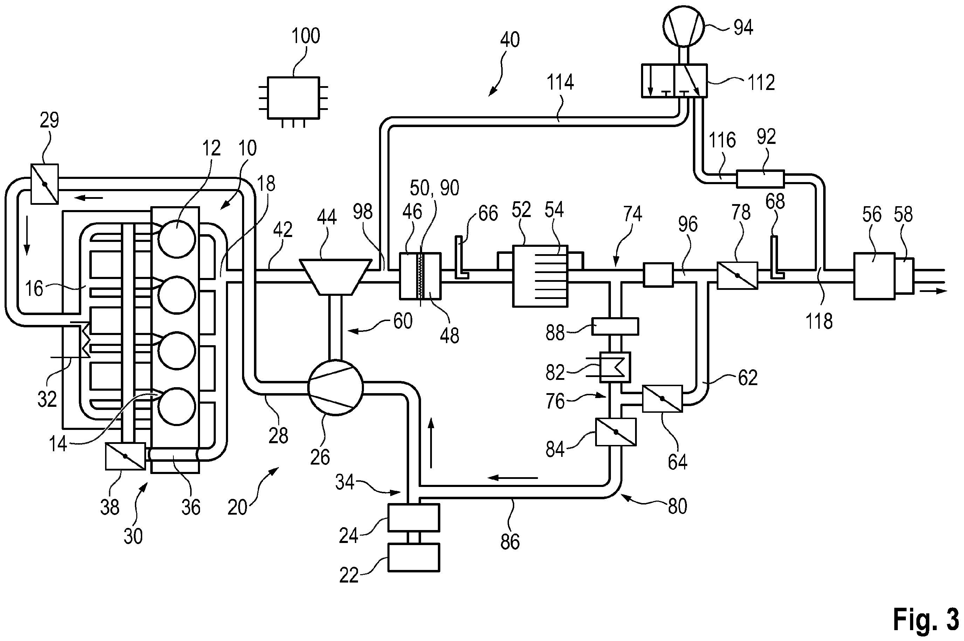

In Figur 3 ist ein drittes Ausführungsbeispiel eines Verbrennungsmotors 10 mit einem erfindungsgemäßen Abgasnachbehandlungssystem dargestellt. Bei im Wesentlichen gleichem Aufbau wie zu Figur 1 ausgeführt, ist in diesem Ausführungsbeispiel zusätzlich zu dem elektrischen Heizelement 90 ein Abgasbrenner 92 vorgesehen, mit welchem ein heißes Abgas stromabwärts des Partikelfilters 52 mit der SCR-Beschichtung 54 und stromaufwärts der weiteren Abgasnachbehandlungskomponente 56 zur selektiven katalytischen Reduktion von Stickoxiden an einer zweiten Einleitstelle 118 in den Abgaskanal 42 der Abgasanlage 40 eingeleitet werden kann. Über den Abgasbrenner 92 kann die weitere Abgasnachbehandlungskomponente 56 zur selektiven katalytischen Reduktion von Stickoxiden unabhängig vom Betrieb des Verbrennungsmotors 10 erwärmt werden. Der Verdichter 94 ist über eine Sekundärluftleitung 114 mit der ersten Einleitstelle 98 stromabwärts der Turbine 44 des Abgasturboladers 60 und stromaufwärts des passiven NOx-Adsorbers 46 verbunden. Der Verdichter 94 ist über eine Versorgungsleitung 116 mit einem Lufteinlass des Abgasbrenners 92 verbunden, um eine Brennkammer des Abgasbrenners 92 mit Frischluft zu versorgen. Stromabwärts des Verdichters 94 ist ein Schaltventil 112, insbesondere ein 2/2-Wege-Ventil, vorgesehen, mit welchem die vom Verdichter 94 verdichtete Frischluft wahlweise der Sekundärluftleitung 114 oder der Versorgungsleitung 116 zugeführt werden kann.

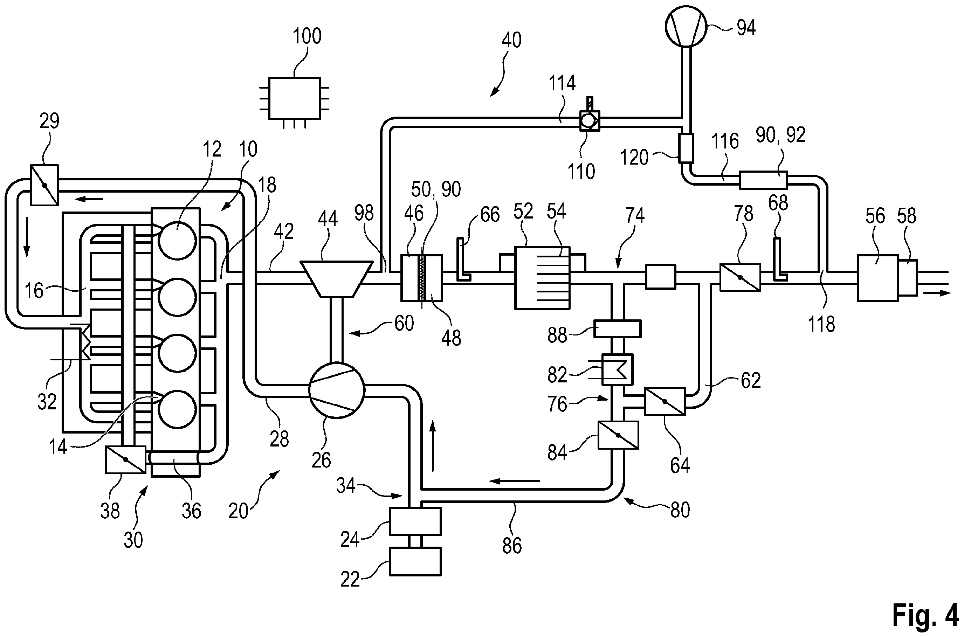

In Figur 4 ist ein weiteres Ausführungsbeispiel eines Verbrennungsmotors 10 mit einem erfindungsgemäßen Abgasnachbehandlungssystem dargestellt. Bei im Wesentlichen gleichem Aufbau wie zu Figur 3 ausgeführt, ist in diesem Ausführungsbeispiel zwischen dem Verdichter 94 und den Leitungen 114, 116 kein Schaltventil angeordnet, sondern in der Sekundärluftleitung 114 ein steuerbares Ventil 110 zur Sperrung oder Freigabe der Sekundärluftleitung, insbesondere ein elektrisch betätigbares Rückschlagventil. Ferner ist in der Versorgungsleitung 116, welche den Verdichter 94 mit dem Abgasbrenner 92 verbindet, eine verstellbare Drossel 120 angeordnet, mit welcher der Leitungsquerschnitt der Versorgungsleitung 116 verstellbar ist und somit die Luftzufuhr von dem Verdichter 94 zum Abgasbrenner 92 beziehungsweise zu der Einleitstelle 98 steuerbar ist. Durch ein Verstellen des Drosselquerschnitts wird die Aufteilung der Luftmenge des Verdichters auf die Sekundärluftleitung 114 und die Versorgungsleitung 116 variiert.

Bei den in Figur 3 und Figur 4 dargestellten Ausführungsbeispielen kann das elektrische Heizelement 90 auch entfallen, wenn durch den Abgasbrenner 92 sichergestellt ist, dass die weitere Abgasnachbehandlungskomponente 56 zur selektiven katalytischen Reduktion von Stickoxiden ihre Light-Off-Temperatur erreicht hat, bevor die im passiven NOx-Adsorber eingespeicherten Stickoxide desorbieren.

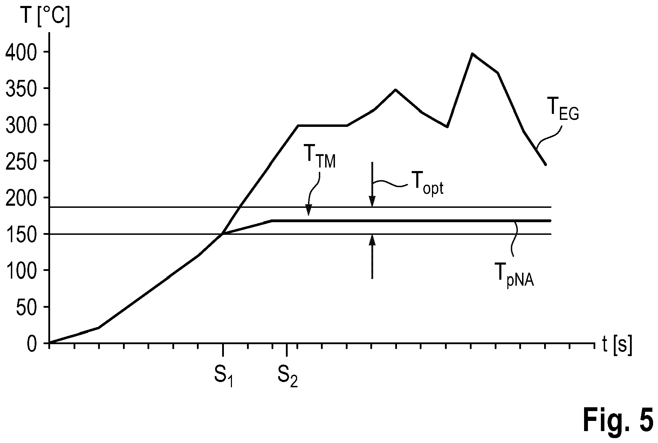

In Figur 5 ist ein Diagramm zum zeitlichen Temperaturverlauf der Abgastemperatur T_{EG} sowie der Temperatur T_{pNA} des passiven NOx-Adsorbers 46 dargestellt. Zum Zeitpunkt S1 erreicht der passive NOx-Adsorber 46 seine erste Schwellentemperatur T_{S1}, sodass das Einblasen von Sekundärluft in die Abgasanlage gestartet wird, um ein weiteres Aufheizen des passiven NOx-Adsorbers zu minimieren. Zum Zeitpunkt S2 wird die Menge der Sekundärluft erhöht, um die Temperatur des passiven NOx-Adsorbers 46 im Wesentlichen konstant zu halten. Dabei ist ein optimaler Temperaturbereich Tₒₚₜ gekennzeichnet, in welchem der passiven NOx-Adsorber seine maximale Speicherfähigkeit aufweist und die thermische Desorption von Stickoxiden vermieden wird. Dieser optimale Temperaturbereich liegt, wie in Figur 5 dargestellt, etwa im Bereich von 150°C bis 180°C. Zeitgleich wird der Abgasstrom des Verbrennungsmotors 10 durch die Heizvorrichtung 50, vorzugsweise durch das elektrische Heizelement 90 aufgeheizt, sodass sich der Abgasstrom stromabwärts des passiven NOx-Adsorbers 46 weiter erhitzt und die Abgasnachbehandlungskomponente 52, 54, 56 zu selektiven katalytischen Reduktion von Stickoxiden auf ihre Light-Off-Temperatur aufheizt. Dabei erreicht diese Abgasnachbehandlungskomponente 52, 54, 56, insbesondere der Partikelfilter 52 mit der SCR-Beschichtung 54 seine Light-Off-Temperatur, bevor die Stickoxide aus dem passiven NOx-Adsorber 46 durch thermische Desorption freigesetzt werden. Somit kann sichergestellt werden, dass zu jedem Zeitpunkt des Verfahrens eine effiziente Speicherung oder Konvertierung der Stickoxide möglich ist. Somit können die Stickoxidemissionen insbesondere in einer Kaltstartphase des Verbrennungsmotors 10 signifikant verringert werden.

### Bezugszeichenliste

- 10: Verbrennungsmotor
- 12: Brennraum
- 14: Kraftstoffinjektor
- 16: Einlass
- 18: Auslass

- 20: Luftversorgungssystem
- 22: Luftfilter
- 24: Luftmassenmesser
- 26: Verdichter
- 28: Ansaugkanal
- 29: Drosselklappe

- 30: Hochdruckabgasrückführung
- 32: Ladeluftkühler
- 34: Einmündung
- 36: Abgasrückführungskanal
- 38: Hochdruck-Abgasrückführungsventil

- 40: Abgasanlage
- 42: Abgaskanal
- 44: Turbine
- 46: passiver NOx-Adsorber
- 48: Oxidationskatalysator

- 50: Heizvorrichtung
- 52: Partikelfilter
- 54: SCR-Beschichtung
- 56: SCR-Katalysator
- 58: Sperrkatalysator
- 60: Abgasturbolader
- 62: Bypassleitung
- 64: Steuerelement
- 66: erstes Dosierelement
- 68: zweites Dosierelement

- 70: Temperatursensor
- 72: Differenzdrucksensoren
- 74: erste Verzweigung
- 76: weitere Verzweigung
- 78: Abgasstauklappe

- 80: Niederdruck-Abgasrückführung
- 82: Niederdruck-Abgasrückführungskühler
- 84: Abgasrückführungsventil
- 86: Abgasrückführungsleitung
- 88: Filter

- 90: elektrisches Heizelement
- 92: Abgasbrenner
- 94: Sekundärluftverdichter
- 96: Hauptkanal
- 98: Einleitstelle

- 100: Steuergerät
- 102: Verzweigung
- 104: Bypass
- 106: elektrisch angetriebener Verdichter
- 108: Rückschlagventil

- 110: Ventil
- 112: Schaltventil
- 114: Sekundärluftleitung
- 116: Versorgungsleitung
- 118: zweite Einleitstelle
- 120: Drossel
- 122: Hauptkanal
- 124: Einmündung

## Patentansprüche

1. Abgasnachbehandlungssystem für einen Verbrennungsmotor (10), umfassend eine Abgasanlage (40), in welcher in Strömungsrichtung eines Abgasstroms des Verbrennungsmotors (10) stromabwärts einer Turbine (44) eines Abgasturboladers (60) ein passiver NOx-Adsorber (46) und stromabwärts des passiven NOx-Adsorbers (46) mindestens eine Abgasnachbehandlungskomponente (52, 54, 56) zur selektiven katalytischen Reduktion von Stickoxiden angeordnet ist, wobei das Abgasnachbehandlungssystem eine Heizvorrichtung (50, 90, 92) umfasst, die in der Abgasanlage (40) stromabwärts des passiven NOx-Adsorbers (46) und stromaufwärts mindestens einer Abgasnachbehandlungskomponente (52, 54, 56) zur selektiven katalytischen Reduktion von Stickoxiden angeordnet ist, **dadurch gekennzeichnet, dass** das Abgasnachbehandlungssystem einen Verdichter (94, 106) umfasst, wobei der Verdichter (94, 106) über eine Sekundärluftleitung (114) mit einer Einleitstelle (98) zur Einleitung von Sekundärluft in die Abgasanlage (40) verbunden ist, welche stromabwärts der Turbine (44) des Abgasturboladers (60) und stromaufwärts des passiven NOx-Adsorbers (46) angeordnet ist.

2. Abgasnachbehandlungssystem nach Anspruch 1, **dadurch gekennzeichnet, dass** der Verbrennungsmotor (10) mit einem Luftversorgungssystem (20) verbunden ist, wobei der Verdichter (94, 106) in dem Luftversorgungssystem angeordnet und als elektrisch angetriebener Verdichter (106) ausgebildet und über einen Ansaugkanal (28) des Luftversorgungssystems (20) mit einem Einlass (16) des Verbrennungsmotors (10) sowie über die Sekundärluftleitung (114) mit der Einleitstelle (98) verbunden ist.

3. Abgasnachbehandlungssystem nach Anspruch 2, **dadurch gekennzeichnet, dass** der elektrische angetriebene Verdichter (106) in einem Bypass (104) zu einem Hauptkanal (122) des Ansaugkanals (28) angeordnet ist, wobei in dem Hauptkanal (122) ein Rückschlagventil (108) angeordnet ist.

4. Abgasnachbehandlungssystem nach Anspruch 2 oder 3, **dadurch gekennzeichnet, dass** in der Sekundärluftleitung (114) ein Ventil (110) zur Sperrung oder Freigabe der Sekundärluftleitung (114) angeordnet ist.

5. Abgasnachbehandlungssystem nach einem der Ansprüche 1 bis 4, **dadurch gekennzeichnet, dass** die Heizvorrichtung (50, 90, 92) als elektrisches Heizelement (90) ausgebildet ist oder ein elektrisches Heizelement (90) umfasst.

6. Abgasnachbehandlungssystem nach einem der Ansprüche 5, **dadurch gekennzeichnet, dass** das elektrische Heizelement (90) unmittelbar stromabwärts des passiven NOx-Adsorbers (46) und stromaufwärts eines Oxidationskatalysators (48) angeordnet ist.

7. Abgasnachbehandlungssystem nach einem der Ansprüche 1 bis 6, **dadurch gekennzeichnet, dass** die Heizvorrichtung (50, 90, 92) als Abgasbrenner (92) ausgebildet ist oder einen Abgasbrenner (92) umfasst.

8. Abgasnachbehandlungssystem nach Anspruch 7, **dadurch gekennzeichnet, dass** der Verdichter (94, 106) über die Sekundärluftleitung (114) mit der Einleitstelle (98) und über eine Versorgungsleitung (116) mit dem Abgasbrenner (92) verbunden ist.

9. Abgasnachbehandlungssystem nach einem der Ansprüche 7 oder 8, **dadurch gekennzeichnet, dass** stromabwärts des passiven NOx-Adsorbers (46) als erste Abgasnachbehandlungskomponente (52, 54, 56) zur selektiven katalytischen Reduktion von Stickoxiden ein Partikelfilter (52) mit einer Beschichtung (54) zur selektiven katalytischen Reduktion von Stickoxiden und stromabwärts des Partikelfilters (52) eine weitere Abgasnachbehandlungskomponente (56) zur selektiven katalytischen Reduktion von Stickoxiden angeordnet ist, wobei stromabwärts des Partikelfilters (52) und stromaufwärts der weiteren Abgasnachbehandlungskomponente (56) an der Abgasanlage (40) eine zweite Einleitstelle (118) für den Abgasbrenner (92) ausgebildet ist.

10. Verfahren zur Abgasnachbehandlung eines Verbrennungsmotors (10) mit einem Abgasnachbehandlungssystem nach einem der Ansprüche 1 bis 9, umfassend folgende Schritte:
- Starten des Verbrennungsmotors (10), wobei ein Abgasstrom des Verbrennungsmotors (10) ab dem Start des Verbrennungsmotors (10) durch die Abgasanlage geleitet wird,
- Vergleichen einer Temperatur (T_{pNA}) des passiven NOx-Adsorbers (46) mit einer Schwellentemperatur (T_{S1}),
- Einblasen von Sekundärluft in die Abgasanlage (40) stromaufwärts des passiven NOx-Adsorbers, wenn die Temperatur des passiven NOx-Adsorbers (46) die erste Schwellentemperatur (T_{S1}) überschreitet,
- Erwärmen des Abgasstroms des Verbrennungsmotors (10) durch die Heizvorrichtung (50, 90, 92), um zumindest eine Abgasnachbehandlungskomponente (52, 54, 56) zur selektiven katalytischen Reduktion von Stickoxiden auf ihre Light-Off-Temperatur aufzuheizen, bevor die Temperatur (T_{pNA}) des passiven NOx-Adsorbers (46) eine zweite Schwellentemperatur (T_{S2}) überschreitet.

## Claims

1. Exhaust-gas aftertreatment system for an internal combustion engine (10), comprising an exhaust-gas system (40) in which, in the flow direction of an exhaust-gas flow of the internal combustion engine (10), a passive NOx adsorber (46) is arranged downstream of a turbine (44) of an exhaust-gas turbocharger (60) and at least one exhaust-gas aftertreatment component (52, 54, 56) for selective catalytic reduction of nitrogen oxides is arranged downstream of the passive NOx adsorber (46), the exhaust-gas aftertreatment system comprising a heating device (50, 90, 92) arranged in the exhaust-gas system (40) downstream of the passive NOx adsorber (46) and upstream of at least one exhaust-gas aftertreatment component (52, 54, 56) for selective catalytic reduction of nitrogen oxides, **characterized in that** the exhaust-gas aftertreatment system comprises a compressor (94, 106), the compressor (94, 106) being connected via a secondary air line (114) to a discharge point (98) for discharging secondary air into the exhaust-gas system (40), which is arranged downstream of the turbine (44) of the exhaust-gas turbocharger (60) and upstream of the passive NOx adsorber (46).

2. Exhaust-gas aftertreatment system according to claim 1,
**characterized in that** the internal combustion engine (10) is connected to an air supply system (20), the compressor (94, 106) being arranged in the air supply system and being designed as an electrically powered compressor (106) and being connected to an inlet (16) of the internal combustion engine (10) via an intake channel (28) of the air supply system (20) and to the discharge point (98) via the secondary air line (114).

3. Exhaust-gas aftertreatment system according to claim 2,
**characterized in that** the electrically powered compressor (106) is arranged in a bypass (104) to a main channel (122) of the intake channel (28), a check valve (108) being arranged in the main channel (122).

4. Exhaust-gas aftertreatment system according to either claim 2 or claim 3, **characterized in that** a valve (110) for blocking or releasing the secondary air line (114) is arranged in the secondary air line (114).

5. Exhaust-gas aftertreatment system according to any of claims 1 to 4, **characterized in that** the heating device (50, 90, 92) is formed as an electric heating element (90) or comprises an electric heating element (90).

6. Exhaust-gas aftertreatment system according to any of claims 5, **characterized in that** the electric heating element (90) is arranged directly downstream of the passive NOx adsorber (46) and upstream of an oxidation catalytic converter (48).

7. Exhaust-gas aftertreatment system according to any of claims 1 to 6, **characterized in that** the heating device (50, 90, 92) is designed as an exhaust-gas burner (92) or comprises an exhaust-gas burner (92).

8. Exhaust-gas aftertreatment system according to claim 7, **characterized in that** the compressor (94, 106) is connected to the discharge point (98) via the secondary air line (114) and to the exhaust-gas burner (92) via a supply line (116).

9. Exhaust-gas aftertreatment system according to any of claims 7 or 8, **characterized in that** a particle filter (52) having a coating (54) for selective catalytic reduction of nitrogen oxides is arranged downstream of the passive NOx adsorber (46) as a first exhaust-gas aftertreatment component (52, 54, 56) for selective catalytic reduction of nitrogen oxides and a further exhaust-gas aftertreatment component (56) for selective catalytic reduction of nitrogen oxides is arranged downstream of the particle filter (52), a second discharge point (118) for the exhaust-gas burner (92) being formed at the exhaust-gas system (40) downstream of the particle filter (52) and upstream of the further exhaust-gas aftertreatment component (56).

10. Method for the exhaust-gas aftertreatment of an internal combustion engine (10) having an exhaust-gas aftertreatment system according to any of claims 1 to 9, comprising the following steps:
- starting the internal combustion engine (10), wherein an exhaust-gas flow of the internal combustion engine (10) is conducted through the exhaust-gas system from the start of the internal combustion engine (10),
- comparing a temperature (T_{pNA}) of the passive NOx adsorber (46) with a threshold temperature (T_{S1}),
- blowing secondary air into the exhaust-gas system (40) upstream of the passive NOx adsorber when the temperature of the passive NOx adsorber (46) exceeds the first threshold temperature (T_{S1}),
- heating the exhaust-gas flow of the internal combustion engine (10) by means of the heating device (50, 90, 92) in order to heat at least one exhaust-gas aftertreatment component (52, 54, 56) for selective catalytic reduction of nitrogen oxides to its light-off temperature before the temperature (T_{pNA}) of the passive NOx adsorber (46) exceeds a second threshold temperature (T_{S2}).

## Revendications

1. Système de post-traitement des gaz d'échappement pour un moteur à combustion interne (10), comprenant un système de gaz d'échappement (40), dans lequel, dans la direction d'écoulement d'un flux de gaz d'échappement du moteur à combustion interne (10) en aval d'une turbine (44) d'un turbocompresseur de gaz d'échappement (60), un adsorbeur de NOx passif (46) est disposé et, en aval de l'adsorbeur de NOx passif (46) au moins un composant de post-traitement des gaz d'échappement (52, 54, 56) est disposé pour la réduction catalytique sélective d'oxydes d'azote, dans lequel le système de post-traitement des gaz d'échappement comprend un dispositif de chauffage (50, 90, 92), qui est disposé dans le système de gaz d'échappement (40) en aval de l'adsorbeur de NOx passif (46) et en amont d'au moins un composant de post-traitement des gaz d'échappement (52, 54, 56) pour la réduction catalytique sélective d'oxydes d'azote, **caractérisé en ce que** le système de post-traitement des gaz d'échappement comprend un compresseur (94, 106), dans lequel le compresseur (94, 106) est relié, par l'intermédiaire d'une conduite d'air secondaire (114) avec un point de déversement (98) pour l'introduction d'air secondaire dans le système de gaz d'échappement (40), qui est disposé en aval de la turbine (44) du turbocompresseur de gaz d'échappement (60) et en amont de l'adsorbeur de NOx passif (46).

2. Système de post-traitement des gaz d'échappement selon la revendication 1, **caractérisé en ce que** le moteur à combustion interne (10) est relié à un système d'alimentation en air (20), dans lequel le compresseur (94, 106) est disposé dans le système d'alimentation en air et est formé comme un compresseur (106) à entraînement électrique et est relié par l'intermédiaire d'un canal d'aspirateur (28) du système d'alimentation en air (20) à une entrée (16) du moteur à combustion interne (10) ainsi que par l'intermédiaire de la conduite d'air secondaire (114) au point de déversement (98).

3. Système de post-traitement des gaz d'échappement selon la revendication 2, **caractérisé en ce que** le compresseur (106) à entraînement électrique est disposé dans un contournement (104) vers un canal principal (122) du canal d'aspiration (28), dans lequel, dans le canal principal (122), une soupape anti-retour (108) est disposée.

4. Système de post-traitement des gaz d'échappement selon la revendication 2 ou 3, **caractérisé en ce que** dans la conduite d'air secondaire (114), une soupape (110) est disposée pour le blocage ou la libération de la conduite d'air secondaire (114).

5. Système de post-traitement des gaz d'échappement selon l'une des revendications 1 à 4, **caractérisé en ce que** le dispositif de chauffage (50, 90, 92) est formé comme un élément de chauffage électrique (90) ou comprend un élément de chauffage électrique (90).

6. Système de post-traitement des gaz d'échappement selon l'une des revendications 5, **caractérisé en ce que** l'élément de chauffage électrique (90) est disposé directement en aval de l'adsorbeur de NOx passif (46) et en amont d'un catalyseur d'oxydation (48).

7. Système de post-traitement des gaz d'échappement selon l'une des revendications 1 à 6, **caractérisé en ce que** le dispositif de chauffage (50, 90, 92) est formé comme un brûleur de gaz d'échappement (92) ou comprend un brûleur de gaz d'échappement (92).

8. Système de post-traitement des gaz d'échappement selon la revendication 7, **caractérisé en ce que** le compresseur (94, 106) est relié par l'intermédiaire de la conduite d'air secondaire (114) au point de déversement (98) et par l'intermédiaire d'une conduite d'alimentation (116) au brûleur de gaz d'échappement (92).

9. Système de post-traitement des gaz d'échappement selon l'une des revendications 7 ou 8, **caractérisé en ce que** en aval de l'adsorbeur de NOx passif (46) un filtre à particules (52) comportant un revêtement (54) pour la réduction catalytique sélective d'oxydes d'azote est disposé en guise de premier composant de post-traitement des gaz d'échappement (52, 54, 56) pour la réduction catalytique sélective d'oxydes d'azote et, en aval du filtre à particules (52) un autre composant de post-traitement des gaz d'échappement (56) pour la réduction catalytique sélective d'oxydes d'azote est disposé, dans lequel en aval du filtre à particules (52) et en amont de l'autre composant de post-traitement des gaz d'échappement (56) un second point de déversement (118) est formé sur le système de gaz d'échappement (40) pour le bruleur de gaz d'échappement (92).

10. Procédé pour le post-traitement des gaz d'échappement d'un moteur à combustion interne (10) comportant un système de post-traitement des gaz d'échappement selon l'une des revendications 1 à 9, comprenant les étapes suivantes :
- démarrage du moteur à combustion interne (10), dans lequel un flux de gaz d'échappement du moteur à combustion interne (10) est dirigé à travers le système de gaz d'échappement à partir du démarrage du moteur à combustion interne (10),
- comparaison d'une température (T_{pNA}) de l'adsorbeur de NOx passif (46) à une température de seuil (T_{S1}),
- injection d'air secondaire dans le système de gaz d'échappement (40) en amont de l'adsorbeur de NOx passif, lorsque la température de l'adsorbeur de NOx passif (46) dépasse la première température de seuil (T_{S1}),
- réchauffage du flux de gaz d'échappement du moteur à combustion interne (10) par le dispositif de chauffage (50, 90, 92) afin de réchauffer au moins un composant de post-traitement des gaz d'échappement (52, 54, 56) pour la réduction catalytique sélective d'oxydes d'azote à sa température d'amorçage, avant que la température (T_{pNA}) de l'adsorbeur de NOx passif (46) ne dépasse une seconde température de seuil (Ts₂).
